# EUROPEAN PATENT APPLICATION

(11) **EP 4 510 721 A2**
(43) Date of publication of application: **19.02.2025**
(21) Application number: 24191856.4
(22) Date of filing: 30.07.2024
(51) Int. Cl.: H04W 60/04

(54) **SLICE BASED POLICY CONTROL FUNCTION (PCF) REGISTRATION IN WIRELESS COMMUNICATION NETWORKS**

(30) Priority: 15.08.2023 US 202318450191
(71) Applicant: T-Mobile Innovations LLC, Bellevue, WA 98006 (US)
(72) Inventor: BARAWKAR, Kunal Prakash, Bothell, 98012 (US); THANNEERU, Suresh, Bothell, 98012 (US); GOPISETTI, Swetha, Issaquah, 98029 (US)
(74) Representative: Suddaby, Mark Edward

(57) **Abstract**

Various embodiments comprise a wireless communication network to qualify user devices for network policy association. In some examples, the wireless communication network comprises a control plane. The control plane detects a registration request for a User Equipment (UE) and registers the UE for network data services. The control plane retrieves network slice information for the UE from a network data system and determines when Policy Control Function (PCF) registration is available based on the network slice information. When the PCF registration is available, the control plane registers the UE with a PCF, receives network policies for the UE from the PCF, and transfers a registration accept message with the network policies to the UE. When PCF registration is not available, the control plane forgoes the PCF registration for the wireless UE and transfers the registration accept message to UE without the network polices.

## Description

### TECHNICAL FIELD

Various embodiments of the present technology relate to User Equipment (UE) registration, and more specifically, to selectively registering UE with the Policy Control Function (PCF) based on the allowed Single-Network Slice Selection Information (S-NSSAI) for UE.

### BACKGROUND

Wireless communication networks provide wireless data services to wireless user devices. Exemplary wireless data services include voice calling, video calling, internet-access, media-streaming, online gaming, social-networking, and machine-control. Exemplary wireless user devices comprise phones, computers, vehicles, robots, and sensors. Radio Access Networks (RANs) exchange wireless signals with the wireless user devices over radio frequency bands. The wireless signals use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). The RANs exchange network signaling and user data with network elements that are often clustered together into wireless network cores over backhaul data links. The core networks execute network functions to provide wireless data services to the wireless user devices. Exemplary network functions include Access and Mobility Management Function (AMF) and Policy Control Function (PCF).

Network registration is a process performed by the network core to confirm the identity of a user device and determine what services the user device is authorized to receive. To initiate network registration, a user device transfers a registration request over a RAN for delivery to an AMF. The AMF interacts with other network functions in the network core to confirm the identity of the user device, typically by transferring an authentication challenge to the device and comparing the challenge response generated by the device to an expected result. Once the identity of the device is confirmed, the AMF interacts with other network functions to retrieve data characterizing the device's service subscription and registers the user device with the PFC. The PCF provides network rules and policies that govern the behavior of the user device on the network to the AMF which then provides the rules to the user device.

Device capabilities vary between different types of user devices. Some user devices do not comprise the capability to enforce rules provided by the PCF. However, the AMF performs PCF registration for all devices registering on the network, even for devices that do not have the capability to enforce rules provided by the PCF. These unnecessary registrations result in excessive signaling towards the PCF which may degrade its performance. Unfortunately, wireless communication networks do not efficiently register user devices with the PCF. Moreover, the wireless communication networks do not effectively inhibit PCF registration for devices that lack the capability to enforce rules provided by the PCF.

### OVERVIEW

This Overview is provided to introduce a selection of concepts in a simplified form that are further described below in the Technical Description. This summary is not intended to identify key features or essential features of the claimed subject matter, nor is it intended to be used as an aid in determining the scope of the claimed subject matter.

Various embodiments of the present technology relate to solutions for User Equipment (UE) registration. Some embodiments comprise a method of operating a wireless communication network to qualify user devices for network policy association. The method comprises detecting a registration request for a wireless UE. The method further comprises registering the wireless UE for network data services. The method further comprises retrieving network slice information for the wireless UE from a network data system. The method further comprises determining when Policy Control Function (PCF) registration is available based on the network slice information for the wireless UE. When PCF registration is available, the method further comprises registering the wireless UE with a PCF, receiving network policies for the wireless UE from the PCF, and transferring a registration accept message for delivery to the wireless UE that comprises the network policies. When PCF registration is not available, the method further comprises forgoing the PCF registration for the wireless UE and transferring the registration accept message for delivery to the wireless UE without sending network polices received from the PCF.

Some embodiments comprise a wireless communication network to qualify user devices for network policy association. The wireless communication network comprises a control plane. The control plane detects a registration request for a wireless UE. The control plane registers the wireless UE for network data services. The control plane retrieves network slice information for the wireless UE from a network data system. The control plane determines when PCF registration is available based on the network slice information for the wireless UE. When PCF registration is available, the control plane registers the wireless UE with a PCF, receives network policies for the wireless UE from the PCF, and transfers a registration accept message for delivery to the wireless UE that comprises the network policies. When PCF registration is not available, the control plane forgoes the PCF registration for the wireless UE and transfers the registration accept message for delivery to the wireless UE without sending network polices received from the PCF.

Some embodiments comprise one or more non-transitory computer-readable storage media having program instructions stored thereon to qualify user devices for network policy association. When executed by a computing system, the program instructions direct the computing system to perform operations. The operations comprise detecting a registration request for a wireless UE. The operations further comprise registering the wireless UE for network data services. The operations further comprise retrieving network slice information for the wireless UE from a network data system. The operations further comprise determining when PCF registration is available based on the network slice information for the wireless UE. When PCF registration is available, the operations further comprise registering the wireless UE with a PCF, receiving network policies for the wireless UE from the PCF, and transferring a registration accept message for delivery to the wireless UE that comprises the network policies. When PCF registration is not available, the operations further comprise forgoing the PCF registration for the wireless UE and transferring the registration accept message for delivery to the wireless UE without sending network polices received from the PCF.

### DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a data network to qualify a user device for network policy association.
Figure 2 illustrates an exemplary operation of the data network to qualify the user device for network policy association.
Figure 3 illustrates a wireless communication network to qualify a wireless User Equipment (UE) for network policy association.
Figure 4 illustrates an exemplary operation of the wireless communication network to qualify the wireless UE for network policy association.
Figure 5 illustrates an exemplary operation of the wireless communication network to qualify the wireless UE for network policy association.
Figure 6 illustrates a Fifth Generation (5G) wireless communication network to qualify UE for Policy Control Function (PCF) registration.
Figure 7 illustrates a 5G UE in the 5G communication network.
Figure 8 illustrates an Internet-of Things (IoT) UE in the 5G communication network.
Figure 9 illustrates a 5G Radio Access Network (RAN) in the 5G wireless communication network.
Figure 10 illustrates a non-Third Generation Partnership Project (3GPP) access node in the 5G wireless communication network.
Figure 11 illustrates network functions in the 5G wireless communication network.
Figure 12 illustrates a Network Function Virtualization Infrastructure (NFVI) in the 5G wireless communication network.
Figure 13 further illustrates the NFVI in the 5G wireless communication network.
Figure 14 illustrates an exemplary operation of the 5G wireless communication network to qualify the UE for PCF registration.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### TECHNICAL DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

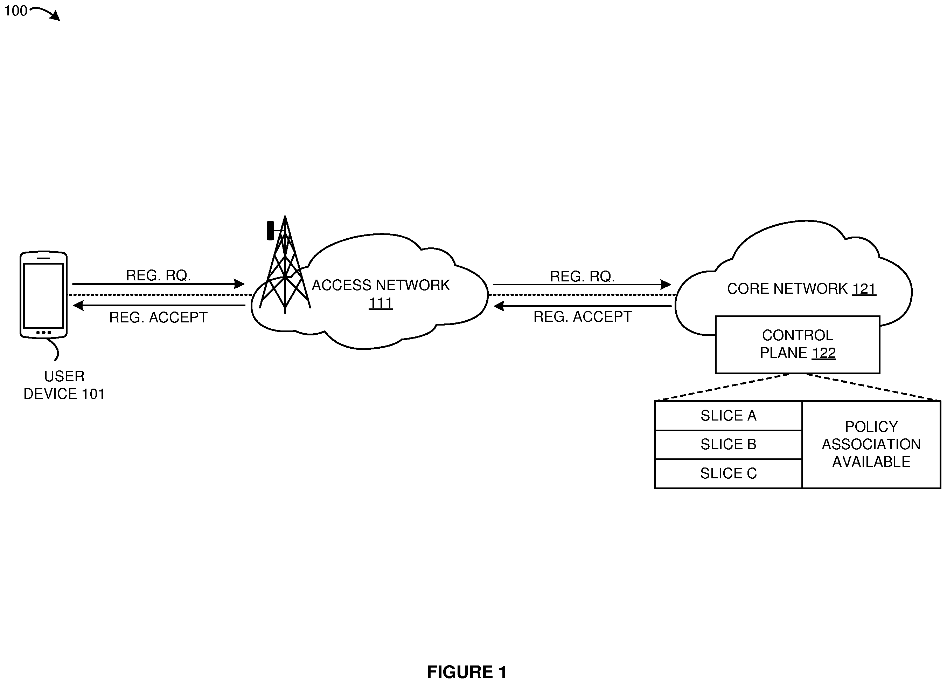

Figure 1 illustrates data network 100 network to qualify a user device for network policy association. Data network 100 delivers services like voice calling machine communications, internet-access, media-streaming, or some other wireless communications product to user devices. Data network 100 comprises user device 101, access network 111, and core network 121. Core network 121 comprises control plane 122. In other examples, data network 100 may comprise additional or different elements than those illustrated in Figure 1.

Various examples of network operation and configuration are described herein. In some examples, control plane 122 detects a registration request (REG. RQ.) for user device 101. Registration entails a set of authentication and authorization procedures to confirm the identity of a user device and determine what services the user device is subscribed to. In response to the registration request, control plane 122 registers user device 101 for wireless data services and retrieves network slice information for user device 101 from a network data system (not illustrated) in core network 121. A network slice comprises a set of network resources to provide configured to provide specific types of data services. Exemplary network slice types include non-Guaranteed Bit Rate (GBR), GBR, low-latency, Enhanced Mobile Broadband (eMBB), Internet-of-Things (IoT), social media, online gaming, and the like. For example, the network slice information for user device 101 may indicate what network slices and/or network slice types that user device 101 is authorized to use. As illustrated in Figure 1, control plane 122 hosts a table that correlates policy association availability for network slices A, B, and C. Policy association entails registering a user device with a policy control entity to determine rules that govern the behavior of the user device on the data network. Control plane 122 determines if network policy association is available for user device 101 based on the network slice information for user device 101. For example, control plane 122 may compare the network slice information to the table to determine if policy association is available for user device 101.

When policy association is available for user device 101, control plane 122 registers user device 101 with the policy control entity (not illustrated) in core network 121. Exemplary policy control entities comprise Policy Control Function (PCF) and Policy Rules and Charging Function (PCRF). Control plane 122 receives network policies from the policy control entity for user device 101. Control plane 122 transfers a registration accept message for delivery to user device 101 that includes the network polices received from the policy control entity. Exemplary network policies include User Equipment Route Selection Policy (URSP) rules, registration control rules, access control rules, and the like. When policy association is not available for user device 101, control plane 122 forgoes registering user device 101 with the policy control entity in core network 121. Since control plane 122 does not register user device 101 with the policy control entity, control plane 122 does not receive any network polices (e.g., URSP rules) for user device 101 from the policy control entity. Control plane 122 transfers a registration accept message for delivery to user device 101 that does not include network polices received from the policy control entity.

User device 101 is representative of a wireless user device. Exemplary user devices include phones, computers, vehicles, drones, robots, sensors, and/or other devices with wireless communication capabilities. Access network 111 exchanges wireless signals with user device 101 over radio frequency bands. The radio frequency bands use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). Access network 111 is connected to core network 121 over backhaul data links. Access network 111 exchanges network signaling and user data with network elements in core network 121. Access network 111 may comprise wireless access points, Radio Access Networks (RANs), internet backbone providers, edge computing systems, or other types of wireless/wireline access systems to provide wireless links to user device 101, the backhaul links to core network 121, and the edge computing services between user device 101 and core network 121.

Access network 111 comprises wireless access nodes to serve user device 101. The access nodes may comprise Radio Units (RUs), Distributed Units (DUs) and Centralized Units (CUs). The RUs may be mounted at elevation and have antennas, modulators, signal processors, and the like. The RUs are connected to the DUs which are usually nearby network computers. The DUs handle lower wireless network layers like the Physical Layer (PHY), Media Access Control (MAC), and Radio Link Control (RLC). The DUs are connected to the CUs which are larger computer centers that are closer to core network 121. The CUs handle higher wireless network layers like the Radio Resource Control (RRC), Service Data Adaption Protocol (SDAP), and Packet Data Convergence Protocol (PDCP). The CUs are coupled to network functions in core network 121.

Core network 121 is representative of computing systems that provide wireless data services to user device 101 over access network 111. Exemplary computing systems comprise data centers, server farms, cloud computing networks, hybrid cloud networks, and the like. The computing systems of core network 121 store and execute the network functions to form control plane 122 to provide wireless data services to user device 101 over access network 111. Control plane 122 may comprise network functions like Access and Mobility Management Function (AMF), Mobility Management Entity (MME), Session Management Function (SMF), PCF, PCRF, Unified Data Management (UDM), Unified Data Registry (UDR), and the like. The computing systems of core network 121 typically store and execute other network functions to form a user plane (not illustrated) to support user data exchange over network 121. The user plane typically comprises network functions like User Plane Function (UPF), edge UPF, Packet Gateway (P-GW), Session Gateway (S-GW), and the like. Core network 121 may comprise a Fifth Generation Core (5GC) architecture and/or an Evolved Packet Core (EPC) architecture.

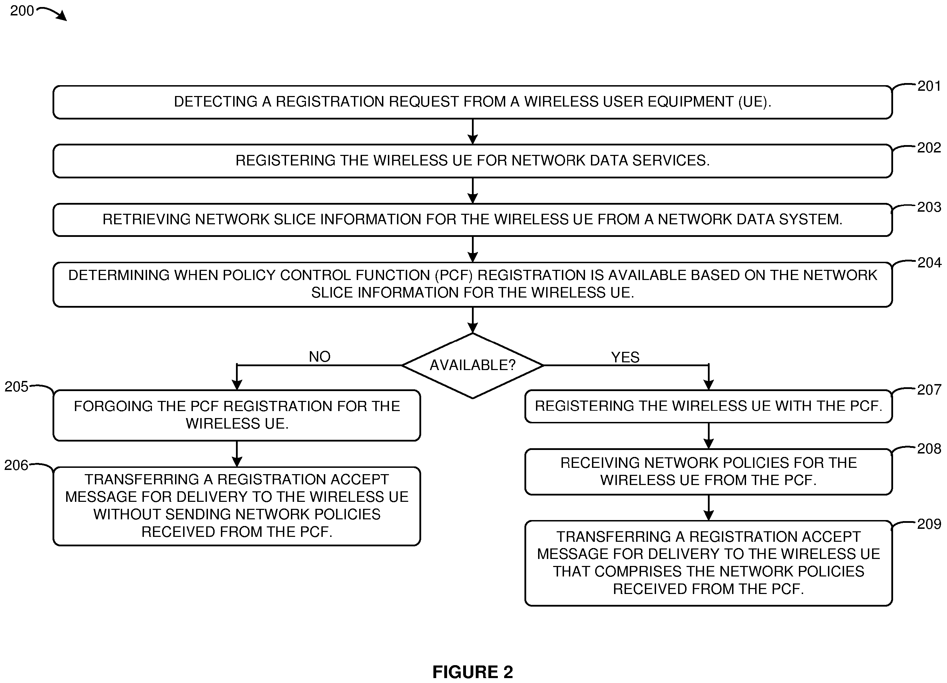

Figure 2 illustrates process 200. Process 200 comprises an exemplary operation of data network 100 to qualify a user device for network policy association. The operation may vary in other examples. The operations of process 200 comprise detecting a registration request from a wireless User Equipment (UE) (step 201). The operations further comprise registering the wireless UE for network data services (step 202). The operations further comprise retrieving network slice information for the wireless UE from a network data system (step 203). The operations further comprise determining when PCF registration is available based on the network slice information for the wireless UE (step 204). When PCF registration is not available, the operations further comprise forgoing the PCF registration for the wireless UE (step 205) and transferring a registration accept message for delivery to the wireless UE without sending network policies received from the PCF (step 206). When PCF registration is available, the operations further comprise registering the wireless UE with the PCF (step 207), receiving network policies for the wireless UE from the PCF (step 208), and transferring a registration accept message for delivery to the wireless UE that comprises the network policies received from the PCF (step 209).

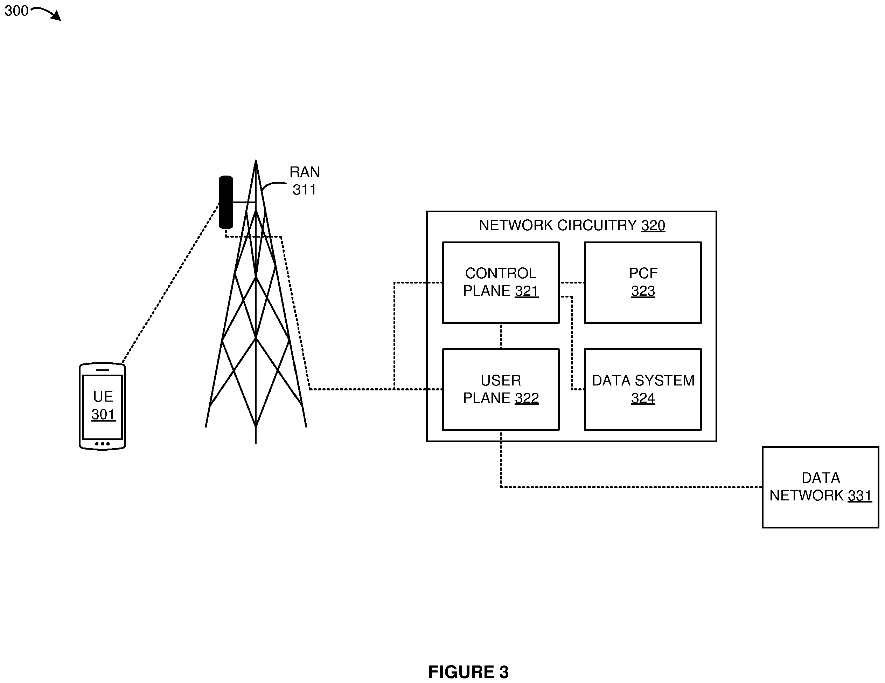

Figure 3 illustrates wireless communication network 300 network to qualify a wireless UE for network policy association. Wireless communication network 300 is an example of data network 100, however network 100 may differ. Wireless communication network 300 comprises UE 301, RAN 311, network circuitry 320, and data network 331. Network circuitry 320 comprises control plane 321, user plane 322, PCF 323, and data system 324. In other examples, wireless network 300 may comprise additional or different elements than those illustrated in Figure 3.

In some examples, UE 301 attaches to control plane 321 over RAN 311 and transfers a registration request to control plane 321. Control plane 321 receives the registration request and interacts with data system 324 to authenticate the identity of UE 301. In response to the authentication, control plane 321 registers UE 301. Control plane 321 requests service metrics for UE 301 from data system 324. Data system 324 returns the requested service metrics to control plane 321. The service metrics comprise information like Quality-of-Service (QoS) levels, service attributes, and slice information. Control plane 321 processes the slice information to determine if UE 301 qualifies for PCF registration. Control plane 321 hosts a whitelist, blacklist, or some other type of data structure that correlates PCF registration availability to UE slice information. For example, control plane 321 may host a whitelist comprising Single-Network Slice Selection Information (S-NSSAIs) that qualify for PCF registration. For example, control plane 321 may host a blacklist comprising S-NSSAIs that do not qualify for PCF registration.

When control plane 321 determines that UE 301 qualifies for PCF registration, control plane 321 transfers a PCF registration request to PCF 323 to create a policy association for UE 301. PCF 323 registers UE 301 and returns network policies to control plane 321 that govern the behavior of UE 301 on wireless network 300. Control plane 320 transfers a registration accept message to UE 301 over RAN 311. The registration accept message indicates that the registration was successful and comprises the network policies received from PCF 323. When control plane 321 determines that UE 301 does not qualify for PCF registration, control plane 321 does not transfer a PCF registration request to PCF 323 to create a policy association for UE 301. Control plane 320 transfers a registration accept message to UE 301 over RAN 311 that the registration request transferred by UE 301 is accepted and that does not comprise any network policies received from PCF 323.

Advantageously, wireless communication network 300 efficiently registers user devices with the PCF. Moreover, wireless communication network 300 effectively inhibits PCF registration for devices that lack the capability to enforce rules provided by the PCF by screening for these devices based on their slice information.

UE 301 and RAN 311 communicate over links using wireless technologies like SGNR, LTE, LP-WAN, WIFI, Bluetooth, and/or some other type of wireless networking protocol. The wireless technologies use electromagnetic frequencies in the low-band, mid-band, high-band, or some other portion of the electromagnetic spectrum. RAN 311, network circuitry 320, and data network 331 communicate over various links that use metallic links, glass fibers, radio channels, or some other communication media. The links use Fifth Generation Core (5GC), IEEE 802.3 (ENET), Time Division Multiplex (TDM), Data Over Cable System Interface Specification (DOCSIS), Internet Protocol (IP), General Packet Radio Service Transfer Protocol (GTP), SGNR, LTE, WIFI, virtual switching, inter-processor communication, bus interfaces, and/or some other data communication protocols.

UE 301 may comprise a phone, vehicle, computer, sensor, drone, robot, or another type of data appliance with wireless communication circuitry. Although RAN 311 is illustrated as a tower, RAN 311 may comprise another type of mounting structure (e.g., buildings), or no mounting structure at all. RAN 311 comprises Fifth Generation (5G) RANs, LTE RANs, gNodeBs, eNodeBs, NB-IoT access nodes, LP-WAN base stations, wireless relays, WIFI hotspots, Bluetooth access nodes, and/or other types of wireless network transceivers. UE 301, and RAN 311 comprise antennas, amplifiers, filters, modulation, analog/digital interfaces, microprocessors, software, memories, transceivers, bus circuitry, and the like. Control plane 321 comprises network functions like AMF, SMF, and the like. User plane 322 comprises network functions like UPF and the like. Data system 324 comprises network entities like UDM and UDR.

UE 301, RAN 311, network circuitry 320, and data network 331 comprise microprocessors, software, memories, transceivers, bus circuitry, and the like. The microprocessors comprise Digital Signal Processors (DSP), Central Processing Units (CPU), Graphical Processing Units (GPU), Application-Specific Integrated Circuits (ASIC), Field Programmable Gate Array (FPGA), and/or the like. The memories comprise Random Access Memory (RAM), flash circuitry, Solid State Drives (SSD), Non-Volatile Memory Express (NVMe) SSDs, Hard Disk Drives (HDDs), and/or the like. The memories store software like operating systems, user applications, radio applications, network functions, and multimedia functions. The microprocessors retrieve the software from the memories and execute the software to drive the operation of wireless communication network 300 as described herein.

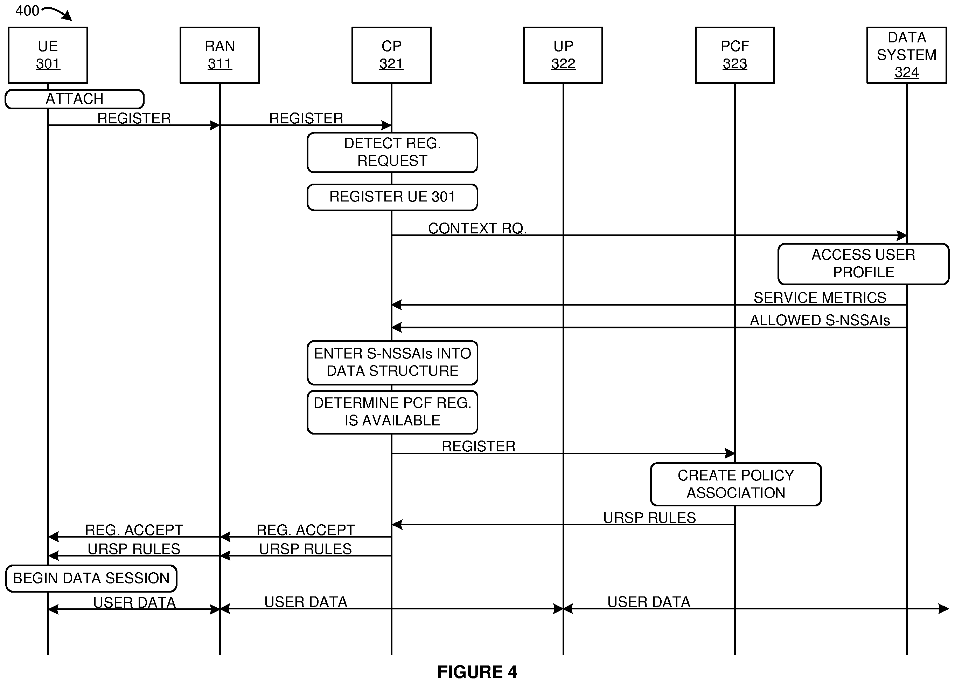

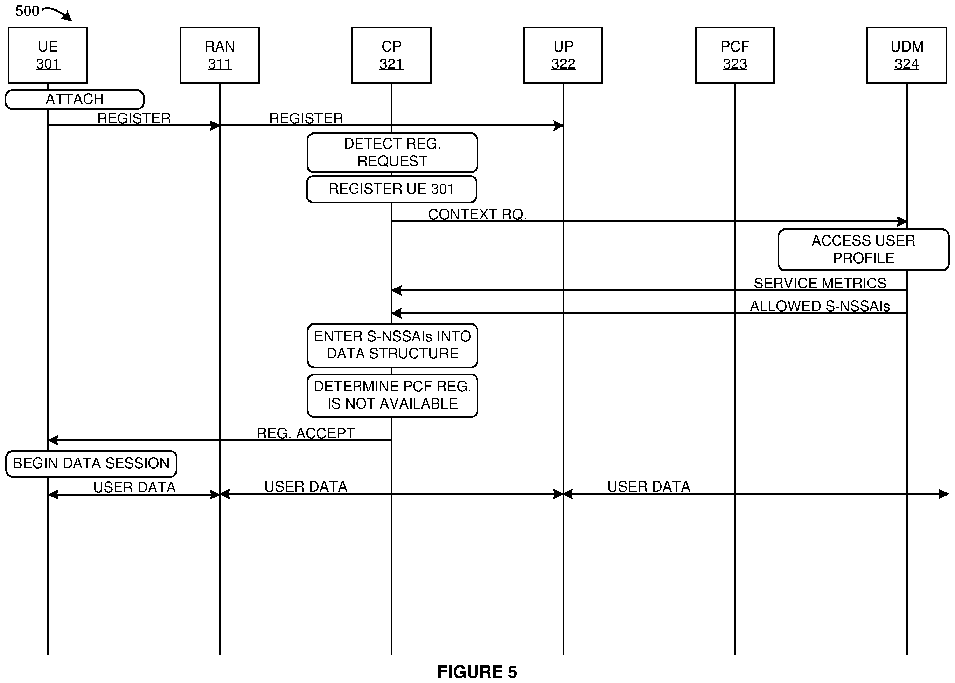

Figures 4 and 5 illustrate processes 400 and 500 respectively. Processes 400 and 500 comprise exemplary operations of wireless communication network 300 to qualify a wireless UE for network policy association. Figure 4 illustrates an example where UE 301 qualifies for network policy association while Figure 5 illustrates an example where UE 301 does not qualify for network policy association.

Referring to Figure 4, UE 301 attaches to RAN 311 and wirelessly transfers a registration request to RAN 311. RAN 311 forwards the registration to control plane (CP) 321. Control plane 321 detects the registration request and in response, registers UE 301 for wireless data services. Control plane 321 transfers a context request (RQ.) for UE 301 to data system 324 to retrieve service attributes that characterize the level of data services for UE 301. In response to the context request, data system 324 accesses a user profile for UE 301 and retrieves the requested service metrics for UE 301, including allowed S-NSSAIs for UE 301. Data system 324 transfers the service metrics and allowed S-NSSAIs to control plane 321. Control plane 321 enters the allowed S-NSSAIs into a data structure that outputs an indication as to whether UE 301 can register with PCF 323. In this example, the data structure outputs an indication that UE 301 can register with PCF 323 and control plane 321 determines PCF registration (REG.) is available based on the output. In response, control plane 321 transfers a registration request for UE 301 to PCF 323. PCF 323 creates a policy association for UE 301 and returns URSP rules for UE 301 to control plane 321. Control plane 321 transfers a registration accept message and the URSP rules to RAN 311. RAN 311 wirelessly transfers the registration accept message and the URSP rules to UE 301. UE 301 begins a data session and exchanges user data for the session with user plane (UP) 322 over RAN 311. User plane 322 exchanges the user data with data network 331. UE 301 uses the URSP rules to route the user data to the appropriate network slices in user plane 322.

Referring to Figure 5, in operation, UE 301 attaches to RAN 311 and wirelessly transfers a registration request to RAN 311 to control plane 321 over RAN 311. Control plane 321 detects the registration request, registers UE 301 for wireless data services, and transfers a context request for UE 301 to data system 324. Data system 324 accesses UE 301's user profile and retrieves the service metrics and allowed S-NSSAIs for UE 301. Data system 324 returns the requested information to control plane 321. Control plane 321 enters the allowed S-NSSAIs into a data structure that outputs an indication as to whether UE 301 can register with PCF 323. In this example, the data structure outputs an indication that UE 301 cannot register with PCF 323. Control plane 321 determines PCF registration is unavailable for UE 301 based on the output. In response, control plane 321 transfers a registration accept message to RAN 311 which delivers the registration accept message to UE 301. Since UE 301 did not qualify for PCF, UE 301 does not receive any network policies from PCF 323 (e.g., URSP rules) in the registration accept message. UE 301 begins a data session and exchanges user data for the session with user plane 322 over RAN 311. User plane 322 exchanges the user data with data network 331.

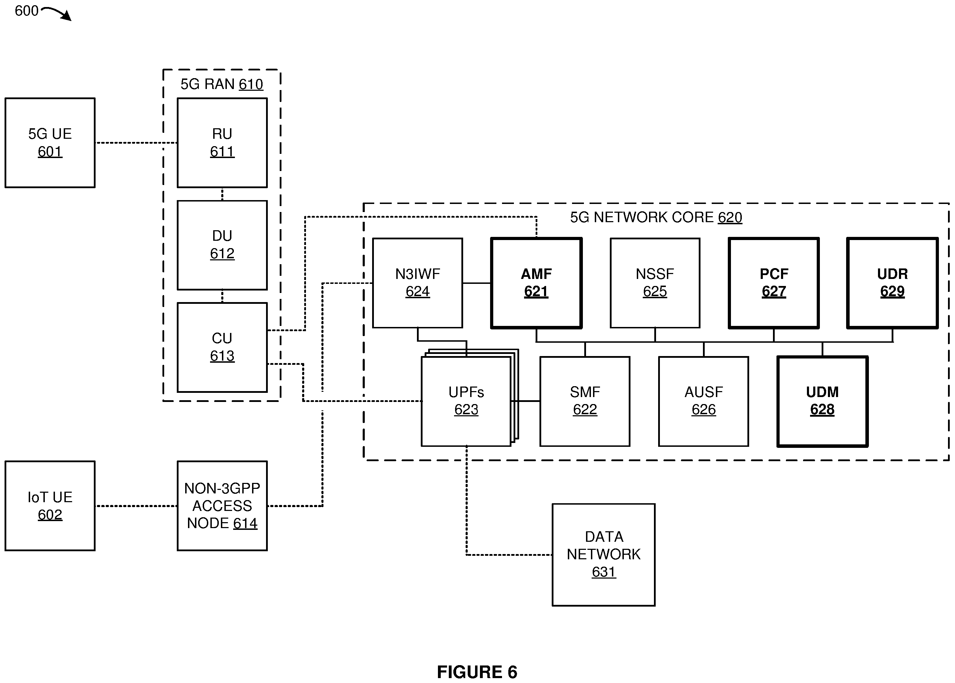

Figure 6 illustrates 5G communication network 600 to qualify UE for PCF registration. 5G communication network 600 comprises an example of data network 100 illustrated in Figure 1 and wireless communication network 300 illustrated in Figure 3, however networks 100 and 300 may differ. Communication network 600 comprises 5G UE 601, Internet-of-Things (IoT) UE 602, 5G RAN 610, non-Third Generation Partnership Project (3GPP) access node 614, 5G network core 620, and data network 631. 5G RAN 610 comprises Radio Unit (RU) 611, Distributed Unit (DU) 612, and Centralized Unit (CU) 613. 5G network core 620 comprises Access and Mobility Management Function (AMF) 621, Session Management Function (SMF) 622, User Plane Functions (UPFs) 623, Non-3GPP Interworking Function (N3IWF) 624, Network Slice Selection Function (NSSF) 625, Authentication Server Function (AUSF) 626, Policy Control Function (PCF) 627, Unified Data Management (UDM) 628, and Unified Data Registry (UDR). Other network functions and network entities like Network Repository Function (NRF), Session Communication Proxy (SCP), Network Exposure Function (NEF), and Application Function (AF) are typically present in 5G network core 620 but are omitted for clarity. In other examples, 5G communication network 600 may comprise different or additional elements than those illustrated in Figure 6.

In some examples, 5G UE 601 wirelessly attaches to CU 613 in RAN 611 over RU 611 and DU 612. UE 601 exchanges attachment signaling with CU 613 to establish a signaling radio bearer with the 5G network applications hosted by CU 613. UE 601 transfers a registration request over the default signaling bearer to CU 613. The registration request includes information like a registration type, UE capabilities, requested slice types, Protocol Data Unit (PDU) session requests, and the like. CU 613 forwards the registration request for UE 601 to AMF 621. In response to the registration request, AMF 621 transfers an identity request to UE 601 over RAN 611. UE 601 indicates its Subscriber Concealed Identifier (SUCI) to CU 613 over the default signaling radio bearer. CU 613 forwards the SUCI to AMF 621. AMF 621 selects AUSF 626 to authenticate the identity of UE 601 and transfers an authentication request that includes the SUCI to AUSF 626. AUSF 626 requests authentication vectors from and indicates the SUCI for UE 601 to UDM 628. UDM 628 generates authentication vectors for UE 601. UDM 628 returns the vectors and the Subscriber Permanent Identifier (SUPI) for UE 601 to AUSF 626. The vectors include an authentication challenge, key selection criteria, and a random number. For example, UDM 628 may retrieve a secret key from the subscriber profile of UE 601 stored by UDR 629 and hash the random number with the secret key to generate the authentication challenge. AUSF 626 transfers the SUPI and authentication vectors to AMF 621. AMF 621 indicates the authentication type and transfers the authentication challenge, key selection criteria, and random number to UE 601 over RAN 611. UE 601 hashes the random number using its copy of the secret key to generate an authentication response transfers the response to AMF 621 over RAN 611. AMF 621 determines the authentication response generated by UE 601 and the expected result match and responsively registers UE 601 with network core 620.

Responsive to the successful registration, AMF 621 selects UDM 628 to generate UE context for UE 601. AMF 621 registers with UDM 628 and requests access and mobility subscription data, SMF selection data, and UE context SMF data from UDM 628. UDM 628 accesses the subscriber profile for UE 601 stored by UDR 629 and retrieves the requested data. UDM 628 transfers the access and mobility subscription data, the SMF selection data, and the UE context SMF data to AMF 621. AMF 621 creates UE context using the received data. The UE context comprises information like QoS metrics, slice selection information, S-NSSAIs, subscribed service features, PDU session information, and the like.

AMF 621 hosts a whitelist that identifies S-NSSAIs that qualify for PCF registration. Prior to registering UE 601 with a PCF, AMF 621 compares the S-NSSAIs retrieved from the subscriber profile of UE 601 with the S-NSSAIs indicated by whitelist. AMF 621 determines that the S-NSSAIs for UE 601 are whitelisted for PCF registration. In response, AMF 621 selects and transfers a request to PCF 627 to create a network policy association for UE 601. PCF 627 registers UE 601 and transfers network policy information for UE 601, including URSP rules, to AMF 621. PCF 627 subscribes for event reporting from AFM 621 like registration state change events for UE 601.

AMF 621 selects NSSF 625 to select network slices for UE 601. AMF 621 indicates the network slices requested by UE 601 in the registration request and the slice selection information retrieved in the UE context to NSSF 625. NSSF 625 uses the selection information and the requested network slices to select a set of network slices for UE 601. NSSF 625 returns slice IDs for the selected slices to AMF 621. For example, NSSF 625 may select a non-GBR slice, a GBR slice, and an eMBB slice for UE 601. In this example, each network slice corresponds to one of UPFs 623, however the network slices may comprise additional network functions and/or multiple ones of UPFs 623.

AMF 621 selects SMF 622 to serve UE 601 based on the SMF selection data, slice IDs, QoS metrics, requested PDU sessions, service attributes, and/or other data retrieved UDM 628 or received in the registration request from UE 601. SMF 622 directs ones of UPFs 623 that correspond to the slice IDs selected by NSSF 625 to serve UE 601. SMF 622 transfers the network addresses for the selected ones of UPFs 623 to AMF 621. AMF 621 includes the policy information and URSP rules provided by PCF 627, the slice IDs returned by NSSF 625, and the network addresses for the UPFs selected by SMF 622 in the UE context. AMF 621 transfers a registration accept message that comprises the UE context to CU 613. CU 613 wirelessly transfers the registration accept message to UE 601 over DU 612 and RU 611 along the default radio signaling bearer. UE 601 stores the UE context in memory.

UE 601 uses the UE context to initiate PDU sessions with network core 620. For example, UE 601 may begin a non-GBR PDU session over a non-GBR slice, a GBR PDU session over a GBR slice, and an eMBB PDU session over an eMBB slice. UE 601 generates uplink user data for its PDU sessions. UE 601 uses the URSP rules provided by PCF 627 to map traffic to the appropriate PDU session and wirelessly transfers the uplink data to CU 613 over RU 611 and DU 612. CU 613 transfers the uplink user data to the ones UPFs 623 that compose the selected network slices of UE 601. The ones of UPFs 623 transfer the uplink data to data network 631. Data network 631 generates downlink data for the PDU sessions and transfers the downlink data to the ones of UPFs 623. The ones of UPFs 623 transfer the downlink data to CU 613. CU 613 wirelessly transfers the downlink data to UE 601 over DU 612 and RU 611.

Concurrently, IoT UE 602 attaches to non-3GPP access node 614. This connection may be wireless or wireline. For example, IoT UE 602 may attach to non-3GPP access node 614 over a wireless WIFI link or a wired ENET link. UE 602 exchanges attachment signaling with access node 614 to establish a signaling bearer with the non-3GPP network applications hosted by access node 614. UE 602 transfers a registration request over the default signaling bearer to node 614. The registration request includes information like a registration type, UE capabilities, requested slice types, PDU session requests, and the like. Since UE 602 is an IoT device and does not possess the same capabilities as 5G UE 601, it should be appreciated that the registration request sent by UE 602 may be different. Access node 614 forwards the registration request for UE 602 to AMF 621 over N3IWF 624. In this example, non-3GPP access node 614 comprises an untrusted 3GPP network. In examples where access node 614 comprises a trusted 3GPP network, N3IWF 624 is replaced with a Trusted Non-3GPP Gateway Function (TNGF).

In response to the registration request, AMF 621 transfers an identity request to UE 602 over N3IWF 624 and access node 614. UE 602 indicates its IoT device ID to AMF 621 over access node 614 and N3IWF 624. AMF 621 selects AUSF 626 to authenticate the IoT device ID provided by UE 602. AMF 621 transfers an authentication request that includes the IoT device ID to AUSF 626. AUSF 626 requests authentication vectors from and indicates the IoT device ID for UE 602 to UDM 628. UDM 628 generates authentication vectors comprising an authentication challenge, key selection criteria, and a random number for UE 602 and returns the vectors and SUPI for UE 602 to AUSF 626. AUSF 626 returns the SUPI and authentication vectors to AMF 621. AMF 621 indicates the authentication type and transfers the authentication challenge to UE 602 over N3IWF 624 and access node 614. UE 602 generates an authentication response and transfers the response to AMF 621 over access node 614 and N3IWF 624. AMF 621 matches the expected result and authentication response and responsively registers UE 602 with network core 620.

Responsive to the successful registration, AMF 621 selects UDM 628 to generate UE context for UE 602. AMF 621 registers with UDM 628 and requests access and mobility subscription data, SMF selection data, and UE context SMF data from UDM 628. UDM 628 accesses the subscriber profile for UE 602 stored by UDR 629 and returns the requested data to AMF 621. AMF 621 creates UE context using the received data. The UE context comprises information like QoS metrics, slice selection information, S-NSSAIs, subscribed service features, PDU session information, and the like. For example, the S-NSSAIs and slice selection information may indicate UE 602 only qualifies for a minimum QoS IoT slice. Prior to performing PCF registration, AMF 621 compares the S-NSSAIs retrieved from the subscriber profile of UE 602 with the whitelist. AMF 621 determines that the S-NSSAIs for UE 602 are not whitelisted for PCF registration. In response, skips PCF registration for UE 602. Advantageously, AMF 621 screens for devices that lack the capability to implement network rules provided by PCF 627. For example, devices (e.g., IoT UE 602) that are only authorized to use minimum QoS slices, IoT slices, non-GBR slices and the like typically also lack the capability to implement network rules like URSP. By screening for these devices based on their slice types, AMF 621 reduces the signaling load on the N15 interface between AMF 621 and PCF 627 and inhibits unnecessary PCF registration for devices that lack the capabilities to support PCF registration. The reduced signaling load enhances the operation of PCF 627.

Once AMF 621 determines PCF registration is not available for IoT UE 602, AMF 621 selects NSSF 625 to select network slices for UE 602. AMF 621 indicates the network slices requested by UE 602 in the registration request and the slice selection information retrieved in the UE context to NSSF 625. NSSF 625 uses the selection information and slice requests to select a set of network slices for UE 602 and returns slice IDs for the selected slices to AMF 621. For example, NSSF 625 may select an IoT device slice for UE 602.

AMF 621 selects SMF 622 to serve UE 602 based on the SMF selection data, slice IDs, QoS metrics, requested PDU sessions, service attributes, and/or other data retrieved UDM 628 or received in the registration request from UE 602. SMF 622 directs ones of UPFs 623 that correspond to the slice IDs to serve UE 602 and indicates the network addresses for the ones of UPFs 623 to AMF 621. AMF 621 includes the slice IDs returned by NSSF 625 and the network addresses for the UPFs selected by SMF 622 in the UE context. It should be noted that AMF 621 does not include any network polices received from PCF 627 in the context for UE 602 since PCF registration did not occur for UE 602. AMF 621 transfers a registration accept message comprising the UE context for UE 602 to UE 602 over N3IWF 624 and access node 614. UE 602 stores the UE context in memory.

UE 602 uses the UE context to initiate a PDU session with network core 620. For example, UE 602 may begin an IoT PDU session over an IoT network slice. UE 602 generates uplink user data for its PDU sessions and transfers the uplink data to access node 614. Access node 614 transfers the uplink user data to the ones UPFs 623 that compose the selected network slices of UE 602 over N3IWF 624. The ones of UPFs 623 transfer the uplink data to data network 631. Data network 631 generates downlink data for the PDU session and transfers the downlink data to the ones of UPFs 623. The ones of UPFs 623 transfer the downlink data to access node 614 over N3IWF 624. Access node 614 transfers the downlink data to UE 602.

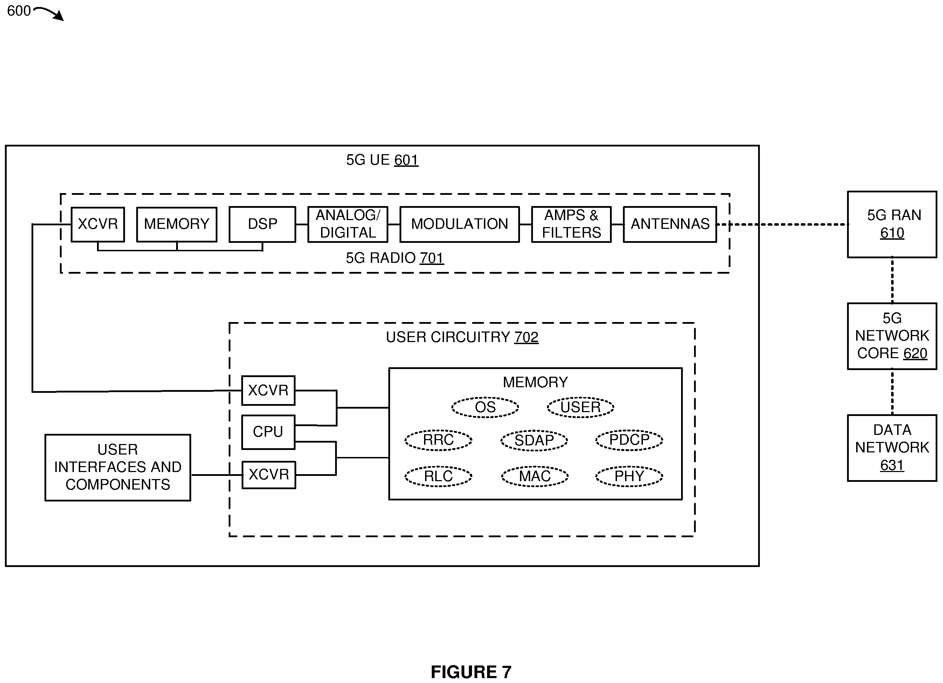

Figure 7 illustrates 5G UE 601 in 5G communication network 600. UE 601 comprises an example of user device 101 illustrated in Figure 1 and UE 301 illustrated in Figure 3, however user device 101 and UE 301 may differ. UE 601 comprises 5G radio 701 and user circuitry 702. Radio 701 comprises antennas, amplifiers, filters, modulation, analog-to-digital interfaces, Digital Signal Processers (DSP), memory, and transceivers (XCVRs) that are coupled over bus circuitry. User circuitry 702 comprises memory, CPU, user interfaces and components, and transceivers that are coupled over bus circuitry. The memory in user circuitry 702 stores an operating system (OS), user applications (USER), and SGNR network applications for Physical Layer (PHY), Media Access Control (MAC), Radio Link Control (RLC), Packet Data Convergence Protocol (PDCP), Service Data Adaptation Protocol (SDAP), and Radio Resource Control (RRC). The antenna in radio 701 is wirelessly coupled to 5G RAN 611 over SGNR links. A transceiver in radio 701 is coupled to a transceiver in user circuitry 702. A transceiver in user circuitry 702 is typically coupled to the user interfaces and components like displays, controllers, and memory.

In radio 701, the antennas receive wireless signals from 5G RAN 611 that transport downlink 5GNR signaling and data. The antennas transfer corresponding electrical signals through duplexers to the amplifiers. The amplifiers boost the received signals for filters which attenuate unwanted energy. Demodulators down-convert the amplified signals from their carrier frequency. The analog/digital interfaces convert the demodulated analog signals into digital signals for the DSPs. The DSPs transfer corresponding SGNR symbols to user circuitry 702 over the transceivers. In user circuitry 702, the CPU executes the network applications to process the SGNR symbols and recover the downlink SGNR signaling and data. The SGNR network applications receive new uplink signaling and data from the user applications. The network applications process the uplink user signaling and the downlink SGNR signaling to generate new downlink user signaling and new uplink 5GNR signaling. The network applications transfer the new downlink user signaling and data to the user applications. The SGNR network applications process the new uplink 5GNR signaling and user data to generate corresponding uplink SGNR symbols that carry the uplink SGNR signaling and data.

In radio 701, the DSP processes the uplink 5GNR symbols to generate corresponding digital signals for the analog-to-digital interfaces. The analog-to-digital interfaces convert the digital uplink signals into analog uplink signals for modulation. Modulation up-converts the uplink analog signals to their carrier frequency. The amplifiers boost the modulated uplink signals for the filters which attenuate unwanted out-of-band energy. The filters transfer the filtered uplink signals through duplexers to the antennas. The electrical uplink signals drive the antennas to emit corresponding wireless 5GNR signals to 5G RAN 611 that transport the uplink SGNR signaling and data.

RRC functions comprise authentication, security, handover control, status reporting, QoS, network broadcasts and pages, and network selection. SDAP functions comprise QoS marking and flow control. PDCP functions comprise security ciphering, header compression and decompression, sequence numbering and re-sequencing, de-duplication. RLC functions comprise Automatic Repeat Request (ARQ), sequence numbering and resequencing, segmentation and resegmentation. MAC functions comprise buffer status, power control, channel quality, Hybrid ARQ (HARQ), user identification, random access, user scheduling, and QoS. PHY functions comprise packet formation/deformation, windowing/de-windowing, guard-insertion/guard-deletion, parsing/de-parsing, control insertion/removal, interleaving/de-interleaving, Forward Error Correction (FEC) encoding/decoding, channel coding/decoding, channel estimation/equalization, and rate matching/de-matching, scrambling/descrambling, modulation mapping/de-mapping, layer mapping/de-mapping, precoding, Resource Element (RE) mapping/de-mapping, Fast Fourier Transforms (FFTs)/Inverse FFTs (IFFTs), and Discrete Fourier Transforms (DFTs)/Inverse DFTs (IDFTs).

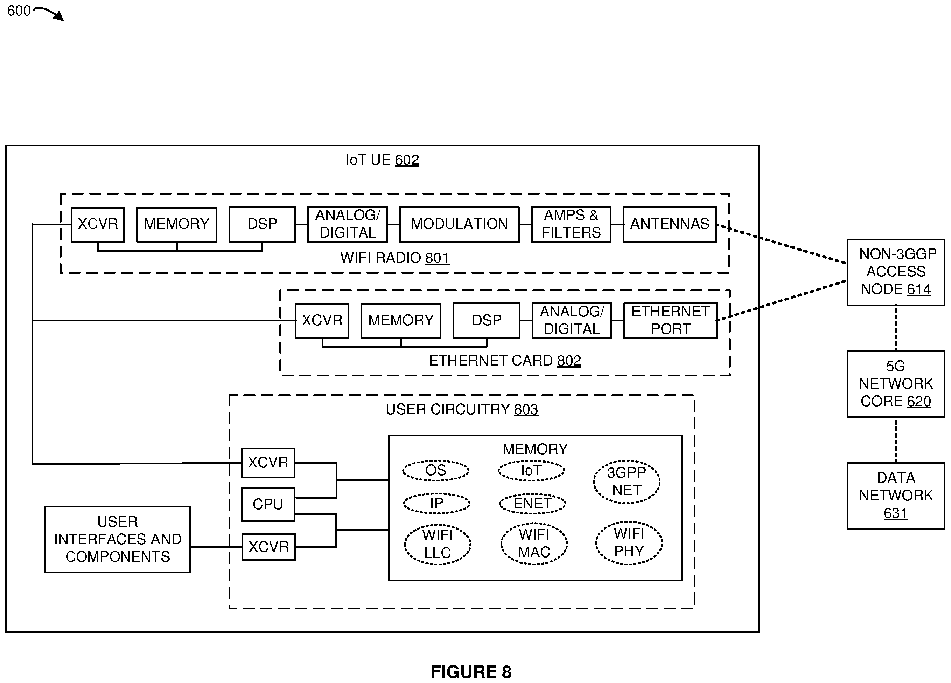

Figure 8 illustrates IoT UE 602 in 5G communication network 600. UE 602 comprises an example of user device 301 illustrated in Figure 1 and UE 301 illustrated in Figure 3, however user device 101 and UE 301 may differ. UE 602 comprises WIFI radio 801, ethernet card 802, and user circuitry 803. WIFI radio 801 comprises antennas, amplifiers, filters, modulation, analog-to-digital interfaces, DSP, memory, and transceivers that are coupled over bus circuitry. Ethernet card 802 comprises an ethernet port, analog-to-digital interfaces, DSP, memory, and transceivers that are coupled over bus circuitry. User circuitry 803 comprises memory, CPU, user interfaces and components, and transceivers (XCVRs) that are coupled over bus circuitry. The memory in user circuitry 803 stores an operating system (OS), IoT applications (IoT), and network applications like Internet Protocol (IP), WIFI Physical Layer (WIFI PHY), WIFI Media Access Control (WIFI MAC), WIFI Logical Link Control (WIFI LLC), and 3GPP Networking (3GPP NET).

The antennas in WIFI radio 801 are wirelessly coupled to non-3GPP access node 614 over a non-3GPP wireless link. Transceivers in WIFI radio 801 are coupled to transceivers in user circuitry 803. The ethernet port in ethernet card is coupled to non-3GPP access node 614 over a non-3GPP wireline link. Transceivers in ethernet card 802 are coupled to transceivers in user circuitry 803. The transceivers in user circuitry 803 are coupled to user components like displays, controllers, and memory. The CPU in user circuitry 803 executes the operating system, IoT applications, WIFI network applications, and ENET network applications to authenticate over and exchange data with non-3GPP access node 614 over WIFI radio 801 and/or ethernet card 802.

In some examples, the WIFI components of UE 602 may be omitted, and UE 602 may instead comprise an ENET only device. For example, if UE 602 comprises an ENET device, UE 602 would comprise ENET card 802 and the ENET networking application while WIFI radio 801 and the WIFI networking applications would be absent. In some examples, the ENET components of UE 602 may be omitted, and UE 602 may instead comprise a WIFI only device. For example, if UE 602 comprises a WIFI device, UE 602 would comprise WIFI radio 801 and the WIFI networking application while ethernet card 802 and the ENET networking applications would absent. In other examples, UE 602 could also use other non-3GPP protocols like bluetooth, narrowband IoT, and the like.

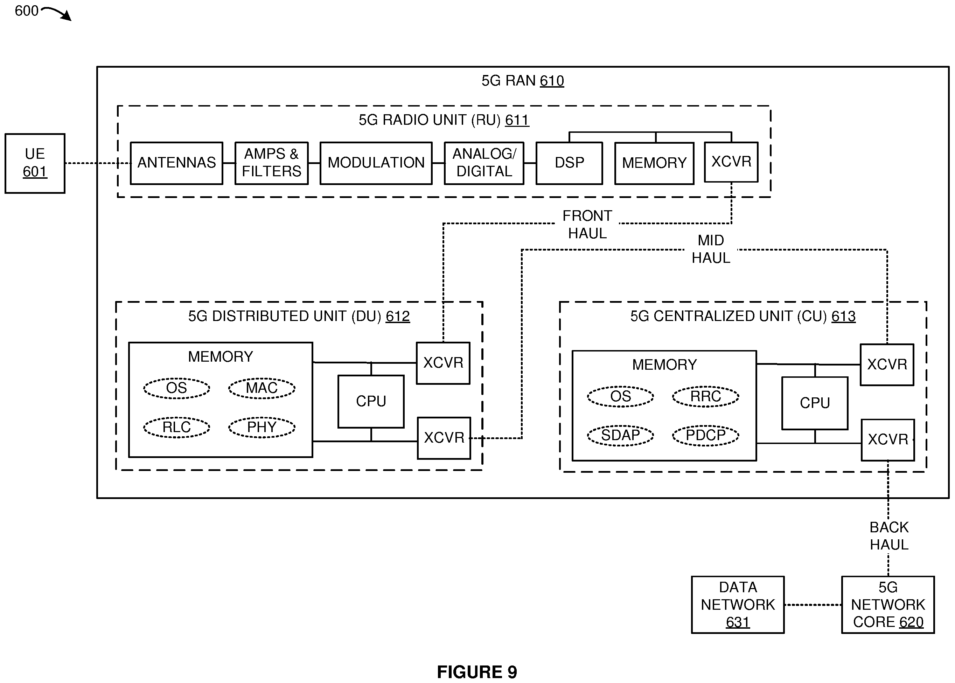

Figure 9 illustrates 5G RAN 611 in 5G communication network 600. 5G RAN 611 comprises 5G Radio Unit (RU) 601, 5G Distributed Unit (DU) 602, and 5G Centralized Unit (CU) 603. RAN 611 comprises an example of access network 111 illustrated in Figure 1 and RAN 311 illustrated in Figure 3, however access network 111 and RAN 311 may differ.

RU 601 comprises antennas, amplifiers, filters, modulation, analog-to-digital interfaces, DSP, memory, and transceivers (XCVRs) that are coupled over bus circuitry. UE 601 is wirelessly coupled to the antennas in RU 601 over SGNR links. Transceivers in 5G RU 601 are coupled to transceivers in 5G DU 602 over fronthaul links like enhanced Common Public Radio Interface (eCPRI). The DSPs in RU 601 executes their operating systems and radio applications to exchange SGNR signals with UE 601 and to exchange 5GNR data with DU 602.

For the uplink, the antennas receive wireless signals from UE 601 that transport uplink 5GNR signaling and data. The antennas transfer corresponding electrical signals through duplexers to the amplifiers. The amplifiers boost the received signals for filters which attenuate unwanted energy. Demodulators down-convert the amplified signals from their carrier frequencies. The analog/digital interfaces convert the demodulated analog signals into digital signals for the DSPs. The DSPs transfer corresponding 5GNR symbols to DU 602 over the transceivers.

For the downlink, the DSPs receive downlink 5GNR symbols from DU 602. The DSPs process the downlink SGNR symbols to generate corresponding digital signals for the analog-to-digital interfaces. The analog-to-digital interfaces convert the digital signals into analog signals for modulation. Modulation up-converts the analog signals to their carrier frequencies. The amplifiers boost the modulated signals for the filters which attenuate unwanted out-of-band energy. The filters transfer the filtered electrical signals through duplexers to the antennas. The filtered electrical signals drive the antennas to emit corresponding wireless signals to UE 601 that transport the downlink SGNR signaling and data.

DU 602 comprises memory, CPU, and transceivers that are coupled over bus circuitry. The memory in 5G DU 602 stores operating systems and SGNR network applications like PHY, MAC, and RLC. CU 603 comprises memory, CPU, and transceivers that are coupled over bus circuitry. The memory in CU 603 stores an operating system, 5GNR network applications like PDCP, SDAP, and RRC. Transceivers in 5G DU 602 are coupled to transceivers in RU 601 over front-haul links. Transceivers in DU 602 are coupled to transceivers in CU 603 over mid-haul links. A transceiver in CU 603 is coupled to network core 620 over backhaul links.

RLC functions comprise ARQ, sequence numbering and resequencing, segmentation and resegmentation. MAC functions comprise buffer status, power control, channel quality, HARQ, user identification, random access, user scheduling, and QoS. PHY functions comprise packet formation/deformation, guard-insertion/guard-deletion, parsing/de-parsing, control insertion/removal, interleaving/de-interleaving, FEC encoding/decoding, channel coding/decoding, channel estimation/equalization, and rate matching/de-matching, scrambling/descrambling, modulation mapping/de-mapping, layer mapping/de-mapping, precoding, RE mapping/de-mapping, FFTs/IFFTs, and DFTs/IDFTs. PDCP functions include security ciphering, header compression and decompression, sequence numbering and re-sequencing, de-duplication. SDAP functions include QoS marking and flow control. RRC functions include authentication, security, handover control, status reporting, QoS, network broadcasts and pages, and network selection.

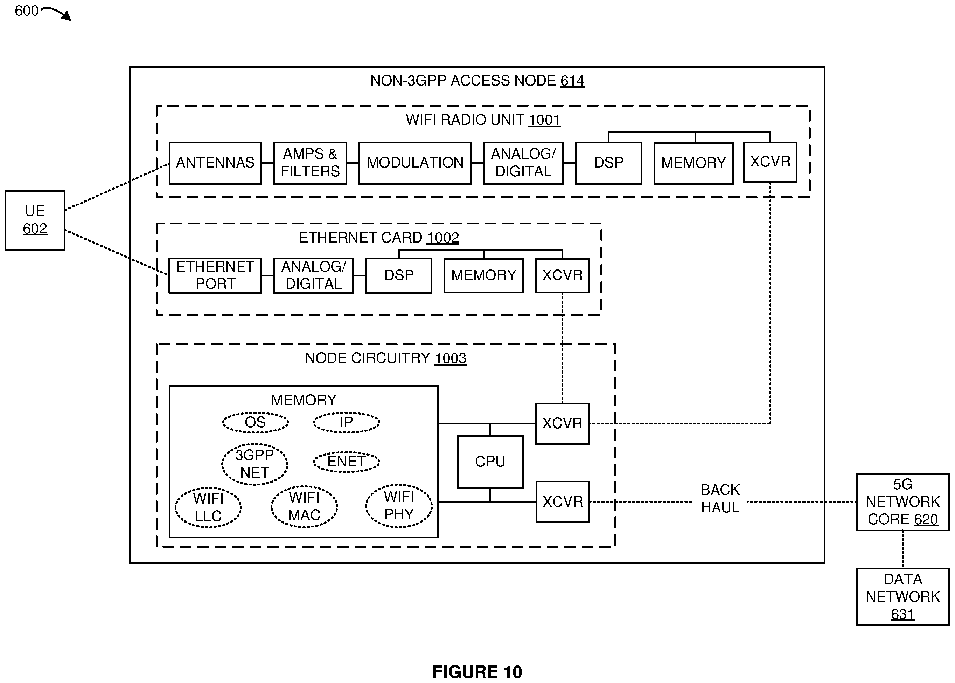

Figure 10 illustrates non-3GPP access node 614 in 5G communication network 600. Access node 614 comprises an example of access network 111 illustrated in Figure 1 and RAN 311 illustrated in Figure 3, however access network 111 and RAN 311 may differ. Non-3GPP access node 614 comprises WIFI radio 1001, ethernet card 1002, and node circuitry 1003. Non-3GPP access node 614 may comprise a trusted access node or an untrusted access node. WIFI radio 1001 comprises antennas, amplifiers, filters, modulation, analog-to-digital interfaces, DSP, memory, and transceivers that are coupled over bus circuitry. Ethernet card 1002 comprises an ethernet port, analog-to-digital interfaces, DSP, memory, and transceivers that are coupled over bus circuitry. Node circuitry 1003 comprises memory, CPU, and transceivers that are coupled over bus circuitry. The memory in node circuitry 1003 stores operating systems (OS), and network applications like WIFI PHY, WIFI MAC, WIFI LLC, IP, ENET and 3GPP NET. Other wireless protocols like bluetooth and narrowband internet-of-things could be used.

The antennas in WIFI radio 1001 are wirelessly coupled to UE 602 over non-3GPP wireless links. Transceivers in WIFI radio 1001 are coupled to transceivers in node circuitry 1003. The ethernet port in ethernet card 1002 is coupled to UE 602 over a non-3GPP wireline link. Transceivers in ethernet card 1002 are coupled to transceivers in node circuitry 1003. Transceivers in node circuitry 1003 are coupled to transceivers in N3IWF 624 over backhaul links. The CPU in node circuitry 1003 executes the operating system and network applications to exchange data and authentication signaling with UE 602.

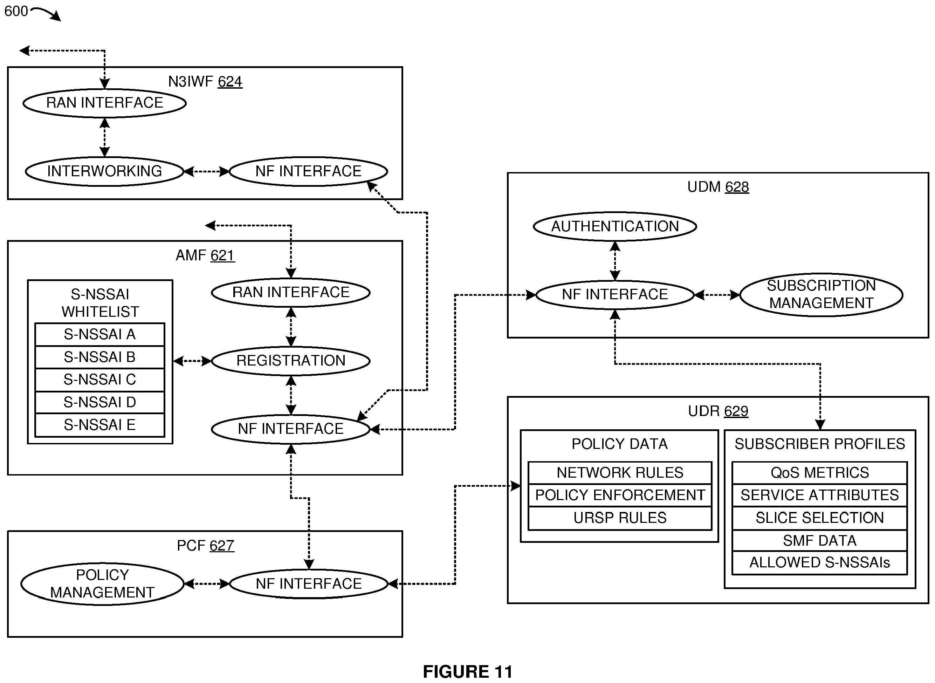

Figure 11 illustrates AMF 621, N3IWF 624, PCF 627, UDM 628, and UDR 628 in 5G wireless communication network 600. AMF 621 comprises modules for UE registration, network function (NF) interfacing, and RAN interfacing and stores an S-NSSAI whitelist. The registration module generates and exchanges registration signaling with UEs 601 and 602 like authentication challenges, confirms authentication responses received from UEs 601 and 602, and screens for PCF registration availability using the S-NSSAI whitelist. As illustrated in Figure 11, the S-NSSAI lists S-NSSAIs A-E which are eligible for PCF registration. S-NSSAIs not listed by the whitelist are not eligible for PCF registration. N3IWF 624 comprises modules for 3GPP interworking, network function interfacing, and RAN interfacing. The interworking module translates signaling between non-3GPP signaling interpretable by access node 614 and 5GC signaling interpretable by the network functions resident in core 620. PCF 627 comprises modules for policy management and network function interfacing. The policy management module provides network policies like URSP rules to AMF 621 in response to PCF registration. UDM 628 comprises modules for user subscription management, UE authentication, and network function interfacing. The authentication module generates authentication challenges for AMF 621 to authenticate UEs 601 and 602. The subscription management module provides subscriber data to AMF 621 to for UE context. UDR 629 stores policy data and subscriber profiles. The policy data includes information like network rules, policy enforcement rules, and URSP rules. The subscriber profiles are associated with UEs (e.g., UE 601 and 602) and include information like QoS metrics, service attributes, slice selection data, SMF data, and allowed S-NSSAIs. The interfacing modules allow AMF 621, N3IWF 624, PCF 627, UDM 628, and UDR 629 to exchange signaling with each other, the other network functions in 5G core 620, and with external systems like RAN 611 and access node 614.

In some examples, the RAN interface module in AMF 621 receives a registration request sent by UE 601 and notifies the registration module. The registration modules interfaces with the authentication module in UDM 628 to generate an authentication challenge for UE 601. The registration module delivers the challenge to UE 601 over the RAN interface module and subsequently receives an authentication response. Upon successfully registering UE 601, the registration module interfaces with the subscription management module in UDM 628 to generate context for UE 601. The subscription management module accesses the subscriber profile for UE 601 in UDR 629 and returns the subscriber data to the registration module. The registration module forms UE context for UE 601 using the received data and compares the allowed S-NSSAIs for UE 601 to the S-NSSAI whitelist and determines UE 601 is eligible for PCF registration. In response, the registration module registers UE 601 with the policy management module in PCF 627. The policy management module accesses the network policy data stored in UDR 629 and returns the network rules, policy enforcement rules, and URSP rules for UE 601 to the registration module. The registration module includes the data received from PCF 627 in the UE context and transfers the UE context for delivery to UE 601 over the RAN interface.

Concurrently, the RAN interface module in N3IWF 624 receives a registration request sent by UE 602. The interworking module translates the non-3GPP signaling into 5GC signaling and delivers the registration request to the registration module in AMF 621. The registration module interfaces with the authentication module in UDM 628 to generate an authentication challenge for UE 602. The registration module returns the challenge to the interworking module in N3IWF 624. The interworking module translates the 5GC signaling into non-3GPP signaling and transfers the challenge for delivery to UE 602 over the RAN interface. The RAN interface module in N3IWF 624 subsequently receives an authentication response generated by UE 602. The interworking module translates the response and delivers the response to the registration module in AMF 621. Upon successfully registering UE 602, the registration module interfaces with the subscription management module in UDM 628 to generate context for UE 602. The subscription management module accesses the subscriber profile for UE 602 in UDR 629 and returns the subscriber data to the registration module. The registration module forms UE context for UE 602 and compares the allowed S-NSSAIs for UE 602 to the S-NSSAI whitelist. The registration module determines UE 602 is ineligible for PCF registration since the allowed S-NSSAIs for UE 602 are not whitelisted. In response, the registration module forgoes PCF registration and transfers the UE context for delivery to the interworking module in N3IWF 624. The interworking module translates the UE context and transfers the UE context for delivery to UE 602 over the RAN interface.

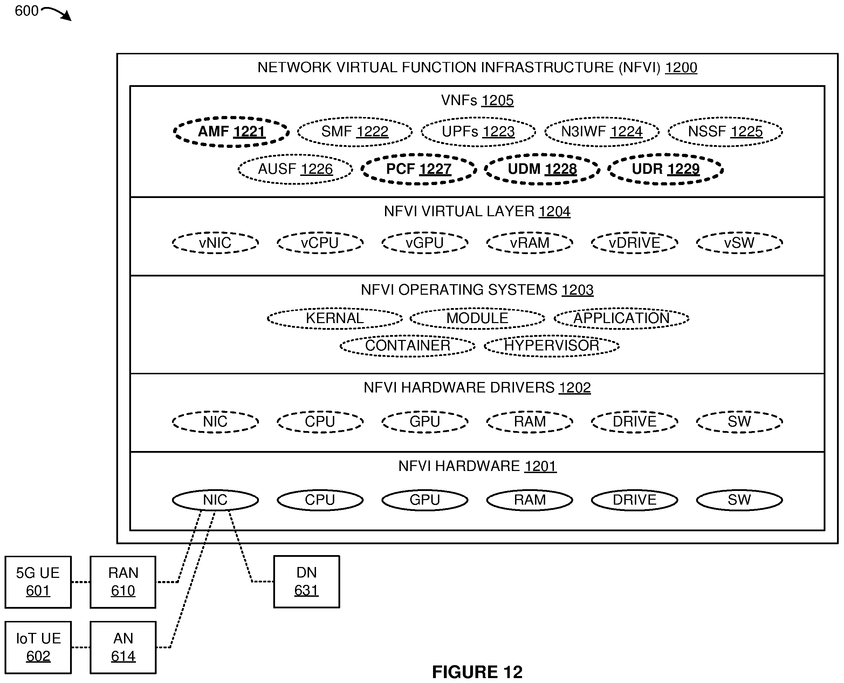

Figure 12 illustrates Network Function Virtualization Infrastructure (NFVI) 1200 in 5G wireless communication network 600. NFVI 1200 comprises an example of core network 121 illustrated in Figure 1 and network circuitry 320 illustrated in Figure 3, although core network 121 and network circuitry 320 may differ. NFVI 1200 comprises NFVI hardware 1201, NFVI hardware drivers 1202, NFVI operating systems 1203, NFVI virtual layer 1204, and NFVI Virtual Network Functions (VNFs) 1205. NFVI hardware 1201 comprises Network Interface Cards (NICs), CPU, GPU, RAM, Flash/Disk Drives (DRIVE), and Data Switches (SW). NFVI hardware drivers 1202 comprise software that is resident in the NIC, CPU, GPU, RAM, DRIVE, and SW. NFVI operating systems 1203 comprise kernels, modules, applications, containers, hypervisors, and the like. NFVI virtual layer 1204 comprises vNIC, vCPU, vGPU, vRAM, vDRIVE, and vSW. NFVI VNFs 1205 comprise AMF 1221, SMF 1222, UPFs 1223, N3IWF 1224, NSSF 1225, AUSF 1226, PCF 1227, UDM 1228, and UDR 1229. Additional VNFs and network elements like NRF, SCP, NEF, and AF are typically present but are omitted for clarity. NFVI 1200 may be located at a single site or be distributed across multiple geographic locations. The NIC in NFVI hardware 1201 is coupled to RAN 611, non-3GPP access node (AN) 614, and data network (DN) 631. NFVI hardware 1201 executes NFVI hardware drivers 1202, NFVI operating systems 1203, NFVI virtual layer 1204, and NFVI VNFs 1205 to form AMF 621, SMF 622, UPFs 623, N3IWF 624, NSSF 625, AUSF 626, PCF 627, UDM 628, and UDR 629.

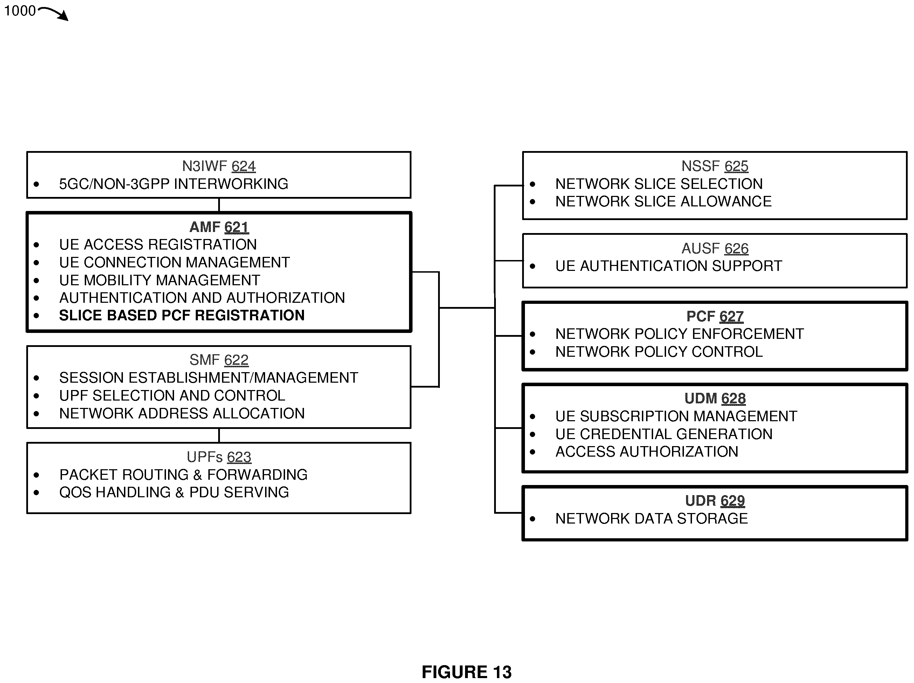

Figure 13 further illustrates NFVI 1200 in 5G communication network 600. AMF 621 comprises capabilities for UE access registration, UE connection management, UE mobility management, UE authentication, UE authorization, and slice-based PCF registration. SMF 622 comprises capabilities for session establishment, session management, UPF selection/control, and network address allocation. UPFs 623 comprise capabilities for packet routing, packet forwarding, QoS handling, and PDU serving. N3IWF 624 comprises capabilities for 5GC/non-3GPP interworking. NSSF 625 comprises capabilities for network slice selection and network slice allowance. AUSF 626 comprises capabilities for UE authentication support. PCF 627 comprises capabilities for network policy enforcement and network policy control. UDM 628 comprises capabilities for UE subscription management, UE credential generation, and UE access authorization. UDR 629 comprises capabilities for network data storage.

In some examples, AMF 621 receives a registration request generated by UE 601 that indicates registration type, UE capabilities, requested slice types, and PDU session requests. In response to the registration request, AMF 621 transfers an identity request for delivery to UE 601. AMF 621 receives an identity indication comprising the SUCI for UE 601 and selects AUSF 626 to authenticate UE 601. AMF 621 transfers an authentication request comprising the SUCI to AUSF 626. AUSF 626 retrieves authentication vectors and the SUPI for UE 601 from UDM 628. AUSF 626 returns the SUPI and authentication vectors to AMF 621. AMF 621 indicates the authentication type and transfers the authentication vectors for delivery to UE 601. AMF 621 receives an authentication response generated by UE 601. AMF 621 matches the authentication response to an expected result and responsively registers UE 601.

Responsive to the successful registration, AMF 621 requests access and mobility subscription data, SMF selection data, and UE context SMF data from UDM 628. UDM 628 retrieves the requested data from UDR 629 and transfers data to AMF 621. AMF 621 creates UE context that comprises QoS metrics, slice selection information, S-NSSAIs, subscribed service features, PDU session information, and the like. Prior to registering UE 601 with a PCF, AMF 621 compares the S-NSSAIs retrieved from the subscriber profile of UE 601 with the S-NSSAI whitelist. AMF 621 determines that the S-NSSAIs for UE 601 are whitelisted for PCF registration. In response, AMF 621 registers UE 601 with PCF 627. PCF 627 responds to the registration by transferring network policy rules and URSP rules for UE 601 to AMF 621. AMF 621 interfaces with NSSF 625 to select network slices for UE 601. NSSF 625 selects network slices for UE 601 based on the slice request received from UE 601 and the slice selection information retrieved from UDM 628. NSSF 625 transfers the slices IDs for the selected slices to AMF 621. AMF 621 directs SMF 622 to serve UE 601. SMF 622 identifies ones of UPFs 623 that correspond to the slice IDs and controls these UPFs to serve UE 601. SMF 622 indicates the network addresses for these UPFs to AMF 621. AMF 621 includes the network and URSP rules, the slice IDs, and the network addresses for the UPFs in the UE context. AMF 621 transfers a registration accept message comprising the UE context for delivery to UE 601

In response to UE 601 initiating PDU data sessions, the ones of UPFs 623 that compose the network slices provisioned to UE 601 receive uplink data generated by UE 601. The ones of UPFs 623 transfer the uplink data to data network 631. The ones of UPFs 623 receive downlink data generated by data network 631 for the PDU session. The ones of UPFs 623 transfer the downlink data for delivery to UE 601.

Concurrently, AMF 621 receives a registration request from IoT UE 602. AMF 621 responds to the registration request by transferring an identity request to N3IWF 624. N3IWF 624 transfers the request for delivery to UE 602. N3IWF 624 receives an identity indication from UE 602 that comprises the IoT device ID for UE 602 and forwards the indication to AMF 621. AMF 621 transfers an authentication request comprising the IoT device ID to AUSF 626. AUSF 626 retrieves authentication vectors the SUPI for UE 602 from UDM 628 and transfers the SUPI and authentication vectors to AMF 621. AMF 621 transfers the vectors to N3IWF 624 which forwards the vectors for delivery to UE 602. N3IWF 624 receives an authentication response generated by UE 602 and delivers the response to AMF 621. AMF 621 matches the expected result and authentication response and responsively registers UE 602 with network core 620.

Responsive to the successful registration, AMF 621 requests UE context data comprising QoS metrics, slice selection information, S-NSSAIs, subscribed service features, and PDU session information, from UDM 628. UDM 628 pulls the requested context data from UDR 629 and provides the UE context data to AMF 621. Prior to registering UE 602 with a PCF, AMF 621 compares the S-NSSAIs retrieved for UE 602 with the S-NSSAI whitelist. AMF 621 determines that the S-NSSAIs for UE 602 are not whitelisted for PCF registration. In response, skips PCF registration for UE 602. Once AMF 621 determines PCF registration is not available for IoT UE 602, AMF 621 interfaces with NSSF 625 to select network slices for UE 602 and interfaces with SMF 622 to select ones of UPFs 623 for UE 602. NSSF 625 indicates the slice IDs for the selected network slices to AMF 621 and SMF 622 indicates the network addresses for the selected UPFs to AMF 621. AMF 621 includes the slice IDs and the network addresses in the UE context. AMF 621 transfers the UE context for UE 602 to N3IWF 624. N3IWF transfers the UE context for delivery to UE 602.

In response to UE 602 initiating an IoT data session, N3IWF 624 receives uplink IoT data generated by UE 602. N3IWF 624 forwards the uplink IoT data to the ones of UPFs 623 that compose the network slices provisioned to UE 602. The ones of UPFs 623 transfer the uplink IoT data to data network 631. The ones of UPFs 623 receive downlink IoT data generated by data network 631 for the IoT data session. The ones of UPFs 623 transfer the downlink IoT data to N3IWF 624. N3IWF 624 transfers the downlink IoT data for delivery to UE 601.

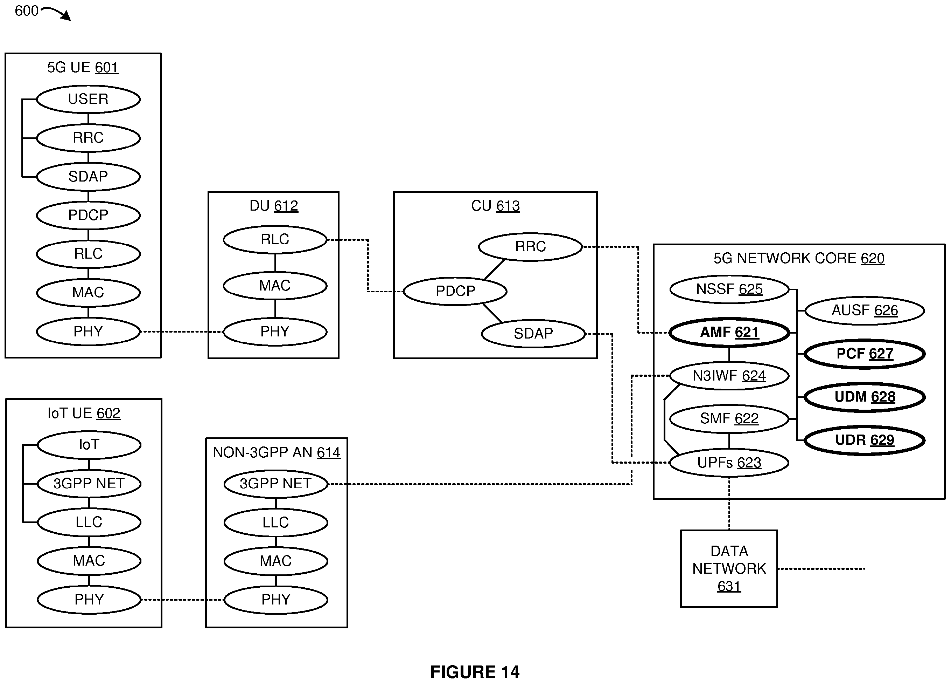

Figure 14 illustrates an exemplary operation of 5G communication network 600 to qualify UE for PCF registration. The operation may vary in other examples. In some examples, 5G UE 601 wirelessly attaches to CU 613 over RU 611 and DU 612. The RRC in UE 601 generates and transfers a registration request to the RRC in CU 613 over the PDCPs, RLCs, MACs, and PHYs. The RRC in CU 613 forwards the registration request to AMF 621. AMF 621 interacts with AUSF 626 and UDM 628 to authenticate UE 601 and register UE 601 for wireless data services. Responsive to the successful registration, AMF 621 interfaces with UDM 628 to generate UE context for UE 601. UDM 628 retrieves the UE context data from UDR 629 and transfers the context data to AMF 621. The UE context data comprises QoS metrics, slice selection information, S-NSSAIs, subscribed service features, and PDU session information.

In this example, AMF 621 instead hosts a blacklist indicating S-NSSAIs that do not qualify for PCF registration. Prior to registering UE 601 with a PCF, AMF 621 compares the S-NSSAIs in the UE context to the blacklist. AMF 621 determines that the S-NSSAIs for UE 601 are not blacklisted for PCF registration. In response, AMF 621 registers UE 601 with PCF 627. PCF 627 responds to the registration by transferring network rules and URSP rules for UE 601 to AMF 621. AMF 621 interfaces with NSSF 625 to select network slices for UE 601. NSSF 625 indicates slices IDs for the selected network slices to AMF 621. AMF 621 interfaces with SMF 622 to select ones of UPFs 623 to serve UE 601. SMF 622 indicates the network addresses for the selected ones of UPFs 623 to AMF 621. AMF 621 includes the network rules and URSP rules received from PCF 627, the slice IDs received from NSSF 625, and the network addresses received from SMF 622 in the UE context. AMF 621 transfers a registration accept message that comprises the UE context to the RRC in CU 613. The RRC in CU 613 transfers the registration accept message to the RRC in UE 601 over the PDCPs, RLCs, MACs, and PHYs. The RRC in UE 601 stores the UE context in memory.

A user application in UE 601 executes initiating a low-latency PDU session. The RRC detects the execution and directs the SDAP in UE 601 to support the low-latency PDU session. The user application generates uplink user data for the low-latency PDU session. The SDAP uses the URSP rules provided by PCF 627 to route the low-latency uplink user data to the appropriate network slice. The SDAP in UE 601 addresses the uplink user data based on the mappings provided in the URSP rules and transfers the uplink user data to the SDAP in CU 613 over the PDCPs, RLCs, MACs, and PHYs. The SDAP in CU 613 transfers the uplink user data to the one of UPFs 623 that composes the low-latency network slice provisioned to UE 601. The one of the UPFs 623 transfers the uplink low-latency user data to data network 631. Data network 631 generates downlink data for the low-latency PDU session and transfers the downlink data to the one of UPFs 623. The one of UPFs 623 transfers the downlink data to the SDAP in CU 613. The SDAP in CU 613 wirelessly transfers the downlink data to the SDAP in UE 601 over the PDCPs, RLCs, MACs, and PHYs.

Concurrently, IoT UE 602 wirelessly attaches to non-3GPP access node 614. The 3GPP NET in UE 602 transfers a registration request to the 3GPP NET in access node 614 over the LLCs, MACs, and PHYs. The 3GPP NET in access node 614 forwards the registration request to AMF 621 over N3IWF 624. AMF 621 receives the registration request. AMF 621 interfaces with AUSF 626 and UDM 628 to authenticate UE 602 and register UE 602 for service on network core 620. Responsive to the successful registration, AMF 621 interfaces with UDM 628 to generate UE context that comprises QoS metrics, slice selection information, S-NSSAIs, subscribed service features, and PDU session information for UE 602. UDM 628 retrieves the UE context data from UDR 629 and transfers the context data to AMF 621.

Prior to registering UE 602 with a PCF, AMF 621 compares the S-NSSAIs from the UE context for UE 602 with the S-NSSAI blacklist. AMF 621 determines that the S-NSSAIs for UE 602 blacklisted for PCF registration. In response, skips PCF registration for UE 602. Once AMF 621 determines PCF registration is not available for IoT UE 602, AMF 621 interfaces with NSSF 625 to select an IoT network slice for UE 602. NSSF 625 indicates the slice ID for the IoT network slice to AMF 621. AMF 621 interfaces with SMF 622 to select one of UPFs 623 to serve UE 601. SMF 622 indicates the network address for the one of UPFs 623 that composes the IoT network slice to AMF 621. AMF 621 includes the slice ID returned by NSSF 625 and the network address for the one of UPFs 623 selected by SMF 622 in the UE context for UE 602. AMF 621 transfers a registration accept message comprising the UE context for UE 602 to N3IWF 624. N3IWF 624 transfers the registration accept message to the 3GPP NET in access node 614. The 3GPP NET in access node 614 transfers the registration accept message to the 3GPP NET in UE 602 over the LLCs, MACs, and PHYs. The 3GPP NET in UE 602 stores the UE context in memory.

An IoT application in UE 602 executes initiating an IoT PDU session. The 3GPP NET detects the execution and responsively supports the IoT PDU session. The IoT application generates uplink user data for the IoT PDU session. The 3GPP NET in UE 602 transfers the uplink IoT data to the 3GPP NET in access node 614 over the LLCs, MACs, and PHYs. The 3GPP NET in access node 614 transfers the uplink IoT data to N3IWF 624. N3IWF 624 transfers the uplink IoT data to the one of UPFs 623 that composes the IoT network slice provisioned to UE 602. The one of the UPFs 623 transfers the uplink IoT data to data network 631. Data network 631 generates downlink IoT data for the IoT PDU session and transfers the downlink data to the one of UPFs 623. The one of UPFs 623 transfers the downlink IoT data to N3IWF 624. N3IWF 624 transfers the downlink IoT data to the 3GPP NET in access node 614. The 3GPP NET in access node 614 transfers the downlink IoT data to the 3GPP NET in UE 602 over the LLCs, MACs, and PHYs.

The wireless data network circuitry described above comprises computer hardware and software that form special-purpose network circuitry to qualify user devices for network policy association. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose network circuitry to qualify user devices for network policy association.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method of operating a wireless communication network to qualify user devices for network policy association, the method comprising:
detecting a registration request for a wireless User Equipment (UE);
registering the wireless UE for network data services;
retrieving network slice information for the wireless UE from a network data system;
determining when Policy Control Function (PCF) registration is available based on the network slice information for the wireless UE;
when the PCF registration is available, registering the wireless UE with a PCF, receiving network policies for the wireless UE from the PCF, and transferring a registration accept message for delivery to the wireless UE that comprises the network policies; and
when the PCF registration is not available, forgoing the PCF registration for the wireless UE and transferring the registration accept message for delivery to the wireless UE without sending the network polices received from the PCF.

2. The method of claim 1 wherein retrieving network slice information for the wireless UE from a network data system comprises transferring a UE context request to a Unified Data Management (UDM) and receiving a UE context response comprising the network slice information.

3. The method of claim 2 wherein the network slice information comprises one or more allowed Single-Network Slice Selection Assistance Information (S-NSSAIs).

4. The method of claim 3 wherein determining when the PCF registration is available based on the network slice information for the wireless UE comprises comparing the one or more allowed S-NSSAIs for the wireless UE to a whitelist that indicates S-NSSAIs that qualify for PCF registration.

5. The method of claim 3 wherein determining when the PCF registration is available based on the network slice information for the wireless UE comprises comparing the one or more allowed S-NSSAIs for the wireless UE to a blacklist that indicates S-NSSAIs that are prohibited from PCF registration.

6. The method of claim 1 wherein registering the wireless UE with the PCF comprises:
selecting the PCF; and
transferring a policy creation request to the PCF to create a policy association for the wireless UE.

7. The method of claim 6 wherein:
receiving the network policies for the wireless UE from the PCF comprises receiving UE Route Selection Policy (URSP) rules from the PCF; and
transferring the registration accept message for delivery to the wireless UE that comprises the network policies comprises transferring the registration accept message for delivery to the wireless UE that comprises the URSP rules.

8. A wireless communication network to qualify user devices for network policy association, the wireless communication network comprising:
a control plane to:
detect a registration request for a wireless User Equipment (UE);
register the wireless UE for network data services;
retrieve network slice information for the wireless UE from a network data system;
determine when Policy Control Function (PCF) registration is available based on the network slice information for the wireless UE;
when the PCF registration is available, register the wireless UE with a PCF, receive network policies for the wireless UE from the PCF, and transfer a registration accept message for delivery to the wireless UE that comprises the network policies; and
when the PCF registration is not available, forgo the PCF registration for the wireless UE and transfer the registration accept message for delivery to the wireless UE without sending the network polices received from the PCF.

9. The wireless communication network of claim 8 wherein the control plane is to transfer a UE context request to a Unified Data Management (UDM) and receive a UE context response comprising the network slice information.

10. The wireless communication network of claim 9 wherein the network slice information comprises one or more allowed Single-Network Slice Selection Assistance Information (S-NSSAIs).

11. The wireless communication network of claim 10 wherein the control plane is to compare the one or more allowed S-NSSAIs for the wireless UE to a whitelist that indicates S-NSSAIs that qualify for PCF registration.

12. The wireless communication network of claim 10 wherein the control plane is to compare the one or more allowed S-NSSAIs for the wireless UE to a blacklist that indicates S-NSSAIs that are prohibited from PCF registration.

13. The wireless communication network of claim 8 wherein the control plane is to select the PCF and transfer a policy creation request to the PCF to create a policy association for the wireless UE.

14. The wireless communication network of claim 13 wherein the control plane is to receive UE Route Selection Policy (URSP) rules from the PCF and transfer the registration accept message for delivery to the wireless UE that comprises the URSP rules.

15. One or more non-transitory computer-readable storage media having program instructions stored thereon to qualify user devices for network policy association, wherein the program instructions, when executed by a computing system, direct the computing system to perform operations, the operations comprising:
detecting a registration request for a wireless User Equipment (UE);
registering the wireless UE for network data services;
retrieving network slice information for the wireless UE from a network data system;
determining when Policy Control Function (PCF) registration is available based on the network slice information for the wireless UE;
when the PCF registration is available, registering the wireless UE with a PCF, receiving network policies for the wireless UE from the PCF, and transferring a registration accept message for delivery to the wireless UE that comprises the network policies; and
when the PCF registration is not available, forgoing the PCF registration for the wireless UE and transferring the registration accept message for delivery to the wireless UE without sending the network polices received from the PCF.
